# EUROPEAN PATENT APPLICATION

(11) **EP 3 993 358 A1**
(43) Date of publication of application: **04.05.2022**
(21) Application number: 20945713.4
(22) Date of filing: 05.08.2020
(51) Int. Cl.: H04L 47/00

(54) **BANDWIDTH MANAGEMENT METHOD AND APPARATUS, COMPUTER STORAGE MEDIUM, AND CHIP**

(71) Applicant: Huawei Technologies Co., Ltd., Shenzhen, Guangdong 518129 (CN)
(72) Inventor: SHEN, Wenzhong, Shenzhen, Guangdong 518129 (CN)
(74) Representative: Epping - Hermann - Fischer
(86) International application number: PCT/CN2020/107152
(87) International publication number: WO 2022/027331

(57) **Abstract**

A bandwidth management technology is provided. A data center is separately connected to a plurality of subordinate devices, and the subordinate devices may be, for example, cameras. The plurality of subordinate devices share an overall bandwidth for transmission with the data center. The data center obtains service information such as actual bandwidth occupation of a target subordinate device, and adjusts a bandwidth of the target subordinate device based on the service information of the target subordinate device. In addition, the data center sends an adjusted result to the target subordinate device. In the solution, a bandwidth requirement of a subordinate device and actual bandwidth occupation of a subordinate device are better matched, thereby improving content transmission flexibility of the subordinate device.

## Description

### TECHNICAL FIELD

This application relates to the field of network technologies, and in particular, to a bandwidth management method and apparatus, a computer storage medium, and a chip.

### BACKGROUND

In a geographically distributed video surveillance system, a computer device (which may be referred to as a peripheral device) is usually deployed near a camera. The peripheral device generally has functions of camera access control, recording and storing, video forwarding, and the like. Under most networking conditions, renting a public network line is required for connecting the peripheral device to a data center.

At present, a plurality of peripheral devices connected to the data center share an overall bandwidth of the public network line. The peripheral device usually transmits content to the data center by preempting a bandwidth. When the peripheral device needs to transmit content to the data center, if there is an idle bandwidth of the public network line, the peripheral device uses the idle bandwidth to transmit the content to the data center; or if all bandwidths of the public network line are occupied, the peripheral device transmits the content to the data center until there is an idle bandwidth of the public network line.

However, because a bandwidth of the public network line is limited, when a plurality of peripheral devices need to transmit content to the data center at the same time, some peripheral devices need to wait for a relatively long time to occupy a bandwidth to transmit content to the data center. Consequently, at present, there is relatively poor flexibility of the peripheral device for transmitting content to the data center.

### SUMMARY

This application provides a bandwidth management method and apparatus, a computer storage medium, and a chip, to resolve a current problem that there is poor flexibility of content transmission between a peripheral device and a data center.

According to a first aspect, a bandwidth management method is provided. A data center is separately connected to a plurality of subordinate devices. The plurality of subordinate devices share an overall bandwidth for transmission with the data center. The method includes: The data center obtains service information of a target subordinate device. The data center adjusts a bandwidth of the target subordinate device based on the service information of the target subordinate device. The data center sends target bandwidth information to the target subordinate device, where the target bandwidth information is used to indicate a size of an adjusted bandwidth of the target subordinate device.

In this application, the data center dynamically adjusts, based on service information of the subordinate device, a bandwidth of the subordinate device. The subordinate device may use a last allocated bandwidth to transmit various types of content to the data center in a timely manner, thereby improving content transmission flexibility. In addition, because the subordinate device can sense a size of the bandwidth of the subordinate device, the subordinate device may use a limited bandwidth allocated to the subordinate device to a greatest extent for content transmission, thereby improving bandwidth utilization.

Optionally, the service information describes actual bandwidth occupation of the target subordinate device. An implementation process in which the data center adjusts the bandwidth of the target subordinate device based on the service information of the target subordinate device includes: The data center adjusts the bandwidth of the target subordinate device based on actual bandwidth occupation of the target subordinate device within a historical time period.

In an implementation, an implementation process in which the data center adjusts the bandwidth of the target subordinate device based on the actual bandwidth occupation of the target subordinate device within the historical time period includes: The data center adjusts the bandwidth of the target subordinate device based on a proportion of an actually occupied bandwidth of the target subordinate device in an allocated bandwidth within the historical time period.

In this implementation, the data center adjusts the bandwidth of the subordinate device as required based on the actual bandwidth occupation of the subordinate device, so that a bandwidth requirement of the subordinate device is satisfied, and a waste due to excessive bandwidth allocation is avoided, thereby improving bandwidth utilization.

In another implementation, an implementation process in which the data center adjusts the bandwidth of the target subordinate device based on the actual bandwidth occupation of the target subordinate device within the historical time period includes: The data center adjusts the bandwidth of the target subordinate device based on a proportion of the actually occupied bandwidth of the target subordinate device in an overall actually occupied bandwidth of the plurality of subordinate devices within the historical time period.

In this implementation, the data center adjusts the bandwidth of the plurality of subordinate devices based on actual bandwidth occupation of the plurality of subordinate devices connected to the data center, so that bandwidth load balancing of the subordinate devices is achieved, thereby improving bandwidth utilization.

Optionally, the service information describes a service scenario run by the target subordinate device. An implementation process in which the data center adjusts the bandwidth allocated to the target subordinate device based on the service information of the target subordinate device includes: The data center adjusts the bandwidth of the target subordinate device based on the service scenario run by the target subordinate device.

Optionally, the implementation process in which the data center adjusts the bandwidth of the target subordinate device based on the service information of the target subordinate device includes: The bandwidth of the target subordinate device is increased when it is determined based on the service information that the service scenario run by the target subordinate device is switched from a low people flow service scenario to a high people flow service scenario; and the bandwidth of the target subordinate device is increased when it is determined based on the service information that the service scenario run by the target subordinate device is switched from a non-emergency service scenario to an emergency service scenario.

In this application, because an amount of data generated by a subordinate device in the high people flow service scenario is greater than an amount of data generated in the low people flow service scenario, the data center allocates more bandwidths to a subordinate device in the high people flow service scenario, so that the subordinate device can transmit content to the data center in a timely manner, and content transmission reliability is ensured. Because a content sending priority of a subordinate device in the emergency service scenario is higher than a content sending priority in the non-emergency service scenario, the data center allocates more bandwidths to a subordinate device in the emergency service scenario, so that the subordinate device can transmit content to the data center in a timely manner, content transmission reliability is ensured, and timely resolving of an emergency is further facilitated. Optionally, the data center may further determine, after networking between the data center and the target subordinate device is completed, an estimated quantity of services of the target subordinate device based on a type of a service carried on the target subordinate device; determine an initial bandwidth of the target subordinate device based on the estimated quantity of services of the target subordinate device; and then send initial bandwidth information to the target subordinate device, where the initial bandwidth information is used to indicate a size of an initial bandwidth of the target subordinate device.

Optionally, the data center further obtains a plurality of content types corresponding to the target subordinate device; determines priorities of the plurality of content types corresponding to the target subordinate device; and then sends content priority information to the target subordinate device, where the content priority information is used to indicate bandwidth occupation priorities of the plurality of content types corresponding to the target subordinate device.

In this application, the data center sends the content priority information to the target subordinate device, so that the target subordinate device actively transmits content of each type to the data center based on a bandwidth occupation priority of each content type, thereby improving content transmission flexibility. In addition, when a link bandwidth is limited, effectiveness and real-time performance of transmitting high-priority content can be ensured, thereby improving content transmission reliability.

Optionally, an implementation process in which the data center determines a priority of each content type corresponding to the target subordinate device includes: The data center determines the bandwidth occupation priority of each content type corresponding to the target subordinate device based on a to-be-run service scenario of the target subordinate device. Correspondingly, an implementation process in which the data center sends the content priority information to the target subordinate device includes: The data center sends content priority information corresponding to the to-be-run service scenario to the target subordinate device, where the content priority information is used to indicate bandwidth occupation priorities of the plurality of content types of the target subordinate device in the to-be-run service scenario.

Optionally, an implementation process in which the data center sends content priority information corresponding to the to-be-run service scenario to the target subordinate device includes: When the service scenario run by the target subordinate device is switched from the low people flow service scenario to the high people flow service scenario, the data center sends content priority information corresponding to the high people flow service scenario to the target subordinate device. The content priority information is used to indicate that a bandwidth occupation priority of video surveillance alarm data is higher than a bandwidth occupation priority of a short alarm video, and the bandwidth occupation priority of the short alarm video is higher than a bandwidth occupation priority of video analysis result data.

Optionally, the implementation process in which the data center sends content priority information corresponding to the to-be-run service scenario to the target subordinate device includes: When the service scenario run by the target subordinate device is switched from the non-emergency service scenario to the emergency service scenario, the data center sends content priority information corresponding to the emergency service scenario to the target subordinate device. The content priority information is used to indicate that a bandwidth occupation priority of video surveillance alarm data is higher than a bandwidth occupation priority of a real-time video, the bandwidth occupation priority of the real-time video is higher than a bandwidth occupation priority of a short alarm video, and the bandwidth occupation priority of the short alarm video is higher than a bandwidth occupation priority of video analysis result data. Optionally, both the data center and the target subordinate device store a mapping relationship between a scenario and a priority, and the mapping relationship between a scenario and a priority includes a plurality of groups of priorities corresponding to a plurality of service scenarios, each of the groups of priorities includes the bandwidth occupation priorities of the plurality of content types. The implementation process in which the data center sends content priority information corresponding to the to-be-run service scenario to the target subordinate device includes: The data center sends an identifier of the to-be-run service scenario of the target subordinate device to the target subordinate device. In this application, the data center needs to send only an identifier of a service scenario to a subordinate device, but does not need to send, to the subordinate device, priorities of various content types corresponding to the subordinate device, so that an amount of transmitted data of content priority information sent by the data center to the subordinate device can be reduced, thereby reducing network overheads. In addition, because a mapping relationship between a scenario and a priority is stored in the subordinate device, the subordinate device may obtain a group of corresponding priorities after receiving an identifier of a to-be-run service scenario, and then adjust priorities of a plurality of content types corresponding to the subordinate device in batches, thereby improving priority adjustment efficiency. According to a second aspect, a bandwidth management apparatus is provided. The apparatus includes a plurality of functional modules, where the plurality of functional modules interwork with each other, to implement the method in the first aspect and various implementations of the first aspect. The plurality of functional modules may be implemented by software, hardware, or a combination of software and hardware, and the plurality of functional modules may be combined or divided in any manner based on specific implementation.

According to a third aspect, a bandwidth management device is provided, where the device includes a processor, a memory, and a transceiver.

The transceiver is configured to receive and/or send data.

The memory is configured to store a computer program, and the computer program includes program instructions. The processor is configured to: invoke the computer program, and cooperate with the transceiver to implement the bandwidth management method according to any implementation of the first aspect.

According to a fourth aspect, a content transmission system is provided, where the system includes a data center and a plurality of subordinate devices, the data center is separately connected to the plurality of subordinate devices, the plurality of subordinate devices share an overall bandwidth for transmission with the data center, and the data center includes the bandwidth management apparatus according to the second aspect or the third aspect.

According to a first aspect, a computer storage medium is provided, where the computer storage medium stores instructions, and when the instructions are executed by a processor of a computer device, the bandwidth management method according to any implementation of the first aspect is implemented.

According to a sixth aspect, a chip is provided, where the chip includes a programmable logic circuit and/or program instructions, and when the chip is run, the bandwidth management method according to any implementation of the first aspect is implemented.

Technical solutions provided in this application include at least the following beneficial effects: The data center dynamically adjusts, based on service information of a subordinate device, a bandwidth of the subordinate device. The subordinate device may use a last allocated bandwidth to transmit various types of content to the data center in a timely manner, thereby improving content transmission flexibility. Because the subordinate device can sense a size of the bandwidth of the subordinate device, the subordinate device may use a limited bandwidth allocated to the subordinate device to a greatest extent for content transmission, thereby improving bandwidth utilization. In addition, the data center sends the content priority information to the target subordinate device, so that the target subordinate device transmits various types of content to the data center based on a bandwidth occupation priority of each content type, and content transmission flexibility is improved. In addition, when a link bandwidth is limited, effectiveness and real-time performance of transmitting high-priority content can be ensured, thereby improving content transmission reliability. Considering a varying amount of data in different time periods, a content transmission system may rent a smaller bandwidth. When a quantity of services is relatively large, content of a higher priority is transmitted, and when a quantity of services is relatively small, content of a lower priority is transmitted, so that there is no need to use a peak bandwidth, thereby reducing network costs.

### BRIEF DESCRIPTION OF DRAWINGS

FIG. 1 is a schematic diagram of a structure of a content transmission system according to an embodiment of this application;
FIG. 2 is a schematic flowchart of a bandwidth management method according to an embodiment of this application;
FIG. 3 is a schematic diagram of a structure of a data center according to an embodiment of this application;
FIG. 4 is a schematic diagram of a structure of a subordinate device according to an embodiment of this application;
FIG. 5 is a schematic diagram of a connection between a data center and a subordinate device according to an embodiment of this application;
FIG. 6 is a schematic diagram of a structure of a bandwidth management apparatus according to an embodiment of this application; and
FIG. 7 is a block diagram of a bandwidth management device according to an embodiment of this application.

### DESCRIPTION OF EMBODIMENTS

To make the objectives, technical solutions, and advantages of this application clearer, the following further describes the implementations of this application in detail with reference to the accompanying drawings.

This application is applied to a content transmission system, where the content transmission system includes a data center and a plurality of subordinate devices. The data center is separately connected to the plurality of subordinate devices, and the plurality of subordinate devices share an overall bandwidth for transmission with the data center. The data center dynamically adjusts, based on service information of a subordinate device, a bandwidth of the subordinate device, so that each subordinate device may use a last allocated bandwidth to transmit various types of content to the data center in a timely manner, thereby improving content transmission flexibility. In addition, because the subordinate device can sense a size of the bandwidth of the subordinate device, the subordinate device may use a limited bandwidth allocated to the subordinate device to a greatest extent for content transmission, thereby improving bandwidth utilization. The data center may further determine priorities of a plurality of content types corresponding to the subordinate device, so that the subordinate device can sequentially transmit content of each type to the data center based on a bandwidth occupation priority of each content type. When a link bandwidth is limited, effectiveness and real-time performance of transmitting high-priority content can be ensured, that is, the subordinate device can use a limited bandwidth to transmit more valuable content.

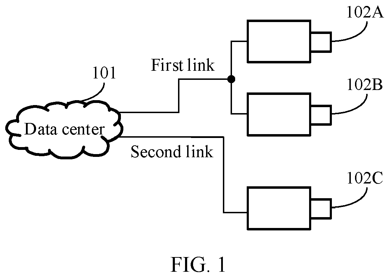

FIG. 1 is a schematic diagram of a structure of a content transmission system according to an embodiment of this application. As shown in FIG. 1, the content transmission system includes a data center 101 and a plurality of subordinate devices 102A to 102C (collectively referred to as subordinate devices 102). The data center 101 is separately connected to the plurality of subordinate devices 102. The data center 101 and the plurality of subordinate devices 102 form a star-like network topology as a whole. The plurality of subordinate devices 102 share an overall bandwidth for transmission with the data center 101. In this figure, a quantity of subordinate devices is merely used as an example for description, but is not used as a limitation on the content transmission system provided in this embodiment of this application.

The data center 101 may be a server, may be a server cluster formed by several servers, or may be a cloud computing service center. The subordinate devices 102 are computing devices having a communicative, computing, and/or storage function. The subordinate devices 102 may be specifically terminals (such as cameras having a network function) or computer devices deployed near a terminal. Therefore, a subordinate device may also be referred to as a peripheral device.

The plurality of subordinate devices 102 are located in one local area network, or the plurality of subordinate devices 102 are located in a plurality of local area networks. For example, referring to FIG. 1, the subordinate device 102A and the subordinate device 102B are located in one local area network, and the subordinate device 102C is located in another local area network. The subordinate device 102A and the subordinate device 102B are both connected to the data center through a first link. The subordinate device 102C is connected to the data center through a second link. An overall bandwidth of the first link and the second link is fixed. In the following embodiments of this application, the first link and the second link are collectively referred to as logical links. The logical links may be wired links or wireless links.

Optionally, the content transmission system provided in the embodiments of this application is a geographically distributed video surveillance system. The subordinate devices 102 may be cameras, physical sensors, or computer devices having a communicative, computing, and/or storage function that are/is deployed near the cameras or the physical sensors. For example, the subordinate devices 102 may be network video recorders (network video recorders, NVRs). The NVR is a network device having a camera access control function, a recording and storing function, and a video forwarding function. One end of the NVR communicates with the data center, and the other end of the NVR may communicate with a camera, thereby obtaining data such as a video or an image in the camera. The NVR may further be a smart NVR. On the basis of a conventional NVR, the smart NVR further has a smart video analysis function. For example, the smart NVR may implement functions such as face recognition, behavior analysis, and/or license plate recognition.

Optionally, in the video surveillance system, data generated by the subordinate device includes one or more of video surveillance alarm data, video analysis result data, short videos of some time segments (for example, short alarm videos related to generated video surveillance alarm data), or a full-time video. The video surveillance alarm data includes alarm data related to a recognized face in a face blacklist, alarm data related to a recognized vehicle of a hit- and-run accident, or the like. The video analysis result data includes analysis result metadata, a metadata-associated image, and the like. The analysis result metadata refers to a text representing image object description information, binary features information, and image data of a corresponding time point that are generated through video analysis. For example, the analysis result metadata may include text information such as a license plate number, and binary feature data used to search for images by an image. The metadata-associated image includes a large image and/or a small image associated with metadata. The large image usually refers to an original image in an acquired video, and the small image usually refers to an image part clipped from the large image. For example, the analysis result metadata is a row of license plate numbers, and the corresponding metadata-associated image is an original image (a large image) in a video showing the license plate numbers and/or a small image that is clipped from the original image and that shows the license plate numbers. The subordinate device usually needs to send both the video surveillance alarm data and the video analysis result data to the data center, and send a short alarm video, a short video related to an emergency, or a short video related to another event to the data center as much as possible, and the full-data video is usually stored in the subordinate device.

Clearly, the content transmission system provided in the embodiments of this application may alternatively be another system applied to an internet of things, and an application scenario of the content transmission system is not limited in the embodiments of this application.

At present, in a geographically distributed content transmission system, renting a public network line is required for connecting the subordinate device to the data center. An overall bandwidth of a rented public network line is limited due to relatively high bandwidth costs per unit of the public network line, and a subordinate device preempts a bandwidth to transmit content to a data center. Consequently, there appears a problem that a subordinate device occupies a bandwidth to transmit low-priority content, and as a result, there is no bandwidth for another subordinate device to transmit high-priority content, and thus there is poor flexibility for a peripheral device to transmit content to a data center at present. A related technology further provides another manner for a subordinate device to transmit content to a data center. The subordinate device uses different logical interfaces to transmit different types of content. The data center invokes the plurality of logical interfaces of the subordinate device as required, to obtain corresponding content. However, the subordinate device can send content corresponding to a logical interface to the data center only when the logical interface is invoked by the data center, that is, the subordinate device can only passively transmit content to the data center, and there is relatively low content transmission flexibility.

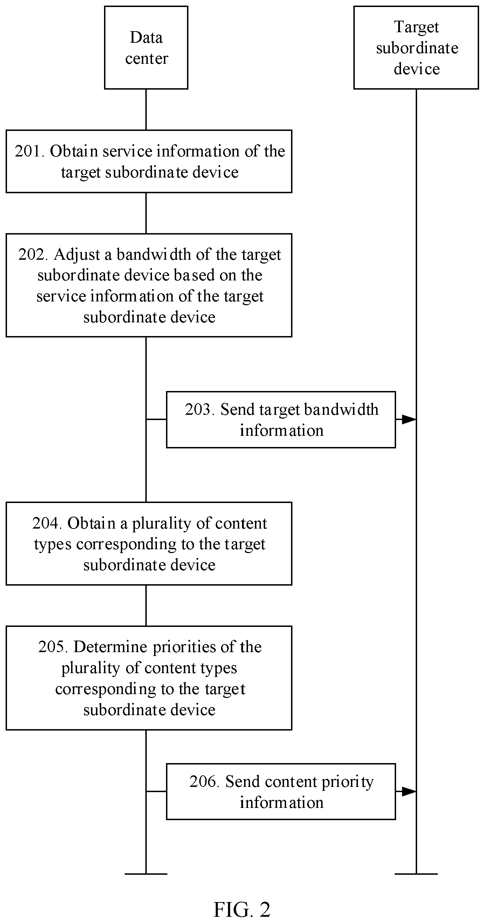

In the bandwidth management method provided in this embodiment of this application, the data center dynamically adjusts, based on service information of the subordinate device, a bandwidth of the subordinate device, so that the subordinate device does not need to preempt a bandwidth or wait for the data center to invoke a logical interface, but the subordinate device may use a last allocated bandwidth to transmit various types of content to the data center in a timely manner, thereby generally improving fitness of a bandwidth for the subordinate device and improving content transmission flexibility. In addition, because the subordinate device can sense a size of the bandwidth of the subordinate device, the subordinate device may use, based on the size of the bandwidth of the subordinate device, a limited bandwidth to a greatest extent for transmitting more valuable content, thereby improving bandwidth utilization. FIG. 2 is a schematic flowchart of a bandwidth management method according to an embodiment of this application. The method may be applied to the content transmission system shown in FIG. 1. As shown in FIG. 2, the method includes the following steps.

Step 201: A data center obtains service information of a target subordinate device.

The target subordinate device is any subordinate device in a plurality of subordinate devices connected to the data center, and the plurality of subordinate devices share an overall bandwidth for transmission with the data center. The overall bandwidth shared by the plurality of subordinate devices for transmission with the data center may be a fixed value. Optionally, the service information of the target subordinate device describes actual bandwidth occupation of the target subordinate device and/or a service scenario run by the target subordinate device. The service scenario run by the target subordinate device is determined based on a footage of a camera in a monitored area, that is, the service scenario run by the target subordinate device can reflect real events happened in the monitored area with the camera. For example, that the target subordinate device runs an emergency service scenario indicates that an emergency has happened in the monitored area with the camera. The emergency may be an unusual event, for example, a traffic accident, appearance of a specific person, crowd gathering, a surveillance violation event (such as invading into a specific zone), fighting, or a crime. For another example, that the target subordinate device runs a high people flow service scenario indicates that a quantity of people has reached a peak threshold of people flow in the monitored area with the camera. Optionally, when the target subordinate device has a function of a camera, the camera may be the target subordinate device; or when the target subordinate device does not have a function of a camera, the camera is connected to the target subordinate device, and can transmit a recorded video and/or image to the target subordinate device.

The actual bandwidth occupation of the target subordinate device includes a proportion of an actually occupied bandwidth of the target subordinate device in an allocated bandwidth and/or a proportion of the actually occupied bandwidth of the target subordinate device in an overall actually occupied bandwidth of the plurality of subordinate devices. The actual bandwidth occupation of the target subordinate device may be obtained from statistics of the data center. For example, a proportion of the actually occupied bandwidth of the target subordinate device in the allocated bandwidth within a statistical time period is equal to a ratio of the actually occupied bandwidth of the target subordinate device to the allocated bandwidth within the statistical time period. A proportion of the actually occupied bandwidth of the target subordinate device in the overall actually occupied bandwidth of the plurality of subordinate devices within a statistical time period (such as 10 minutes, one hour, or one day) is equal to a ratio of the actually occupied bandwidth of the target subordinate device to the overall actually occupied bandwidth of the plurality of subordinate devices within the statistical time period. The statistical time period is a historical time period, and an allocated bandwidth of the target subordinate device within each statistical time period is usually fixed. Optionally, the data center periodically collects statistics on the actual bandwidth occupation of the target subordinate device.

In this embodiment of this application, an example in which the content transmission system is applied to a video surveillance system is used for description. A service scenario run by the target subordinate device includes one or more of a low people flow service scenario, a high people flow service scenario, a non-emergency service scenario, or an emergency service scenario. The low people flow service scenario and the non-emergency service scenario may be a same service scenario, and are considered as usual service scenarios. Optionally, the data center determines the service scenario run by the target subordinate device based on content transmitted by the target subordinate device. For example, when receiving the video surveillance alarm data sent by the target subordinate device, the data center determines that abnormality occurs in a monitored area of the target subordinate device, and then determines that the service scenario run by the target subordinate device is the emergency service scenario. Alternatively, the data center determines the service scenario run by the target subordinate device based on time information. For example, the data center determines that a service scenario within morning and evening peak hours is the high people flow service scenario.

Step S202: The data center adjusts a bandwidth of the target subordinate device based on the service information of the target subordinate device.

Optionally, when the content transmission system is run, the data center periodically adjusts the bandwidth of the target subordinate device based on the actual bandwidth occupation of the target subordinate device, or the data center adjusts the bandwidth of the target subordinate device in real time based on the service scenario run by the target subordinate device.

In an optional embodiment of this application, the service information of the target subordinate device describes the actual bandwidth occupation of the target subordinate device. An implementation process of step 202 includes: The data center adjusts the bandwidth of the target subordinate device based on actual bandwidth occupation of the target subordinate device within a historical time period. To be specific, the data center determines a bandwidth allocated to the target subordinate device within a second time period based on actual bandwidth occupation of the target subordinate device within a first time period, where the first time period is before the second time period in time sequence. The second time period may be next to the first time period, that is, an ending time point of the first time period is a starting time point of the second time period. Alternatively, the second time period may not be next to the first time period, that is, an ending time point of the first time period is before a starting time point of the second time period in time sequence.

In a possible implementation, the data center adjusts the bandwidth of the target subordinate device based on a proportion of an actually occupied bandwidth of the target subordinate device in an allocated bandwidth within a historical time period.

Optionally, when the proportion of the actually occupied bandwidth of the target subordinate device in the allocated bandwidth within the historical time period is less than a first threshold, the data center decreases the bandwidth of the target subordinate device. When the proportion of the actually occupied bandwidth of the target subordinate device in the allocated bandwidth within the historical time period is greater than a second threshold, the data center increases the bandwidth of the target subordinate device. The second threshold is greater than or equal to the first threshold. In this implementation, the data center adjusts the bandwidth of the subordinate device as required based on the actual bandwidth occupation of the subordinate device, so that a bandwidth requirement of the subordinate device is satisfied, and a waste due to excessive bandwidth allocation is avoided, thereby improving bandwidth utilization.

In another possible implementation, the data center adjusts the bandwidth of the target subordinate device based on a proportion of an actually occupied bandwidth of the target subordinate device in an overall actually occupied bandwidth of a plurality of subordinate devices within a historical time period.

Optionally, the data center uses a product of the proportion of the actually occupied bandwidth of the target subordinate device in the overall actually occupied bandwidth of the plurality of subordinate devices within a historical time period and the overall bandwidth as the bandwidth of the target subordinate device.

In this implementation, the data center adjusts the bandwidth of the plurality of subordinate devices based on actual bandwidth occupation of the plurality of subordinate devices connected to the data center, so that bandwidth load balancing of the subordinate devices is achieved, thereby improving bandwidth utilization.

In another optional embodiment of this application, the service information of the target subordinate device describes the service scenario run by the target subordinate device. Therefore, an implementation process of step S202 includes: The data center adjusts the bandwidth of the target subordinate device based on the service scenario run by the target subordinate device.

Optionally, the bandwidth of the target subordinate device is increased when the data center determines, based on the service information, that the service scenario run by the target subordinate device is switched from the low people flow service scenario to the high people flow service scenario. Correspondingly, the data center decreases a bandwidth of another subordinate device running the low people flow service scenario. When a subordinate device runs the high people flow service scenario, content that needs to be transmitted to the data center includes one or more of video surveillance alarm data, a short alarm video, or video analysis result data.

For example, in the content transmission system shown in FIG. 1, it is assumed that the subordinate device 102C is applied to traffic surveillance, and the subordinate device 102A and the subordinate device 102B are applied to shopping mall surveillance. The subordinate device 102C runs the high people flow service scenario within morning and evening peak hours (for example, a time period of 7:00 to 9:00 and a time period of 17:30 to 19:00), and the subordinate device 102A and the subordinate device 102B run the low people flow service scenario. At a start of the morning and evening peak hours, the data center increases a bandwidth of the subordinate device 102C, and decreases bandwidths of the subordinate device 102A and the subordinate device 102B; and at an end of the morning and evening peak hours, the data center decreases the bandwidth of the subordinate device 102C, and increases the bandwidths of the subordinate device 102A and the subordinate device 102B, that is, returns to normal bandwidth allocation among subordinate devices 102A to 102C.

In this embodiment of this application, because an amount of data generated by a subordinate device in the high people flow service scenario is greater than an amount of data generated in the low people flow service scenario, the data center allocates more bandwidths to a subordinate device in the high people flow service scenario (where the data center may need to decrease a bandwidth allocated to another subordinate device because an overall bandwidth is limited), so that the subordinate device can transmit content to the data center in a timely manner and content transmission reliability is ensured.

Optionally, the bandwidth of the target subordinate device is increased when the data center determines, based on the service information, that the service scenario run by the target subordinate device is switched from the non-emergency service scenario to the emergency service scenario. Correspondingly, the data center decreases a bandwidth of another subordinate device running the non-emergency service scenario. When a subordinate device runs the emergency service scenario, content that needs to be transmitted to the data center includes one or more of video surveillance alarm data, a real-time video, a short alarm video, or video analysis result data.

For example, in the content transmission system shown in FIG. 1, it is assumed that the subordinate device 102A and the subordinate device 102B are applied to traffic surveillance in an area 1, and the subordinate device 102C is applied to traffic surveillance in an area 2. When the data center determines, based on content sent by the subordinate device 102C, that a traffic accident has happened in the area 2, the data center increases a bandwidth of the subordinate device 102C, and decreases bandwidths of the subordinate device 102A and the subordinate device 102B.

In this embodiment of this application, because a content sending priority of a subordinate device in the emergency service scenario is higher than a content sending priority in the non-emergency service scenario, the data center allocates more bandwidths to a subordinate device in the emergency service scenario, so that the subordinate device can transmit content to the data center in a timely manner, content transmission reliability is ensured, and timely resolving of an emergency is further facilitated.

Optionally, after networking between the data center and the target subordinate device is completed, the data center may further allocate an initial bandwidth to the target subordinate device. The data center may determine an estimated quantity of services of the target subordinate device based on a type of a service carried on the target subordinate device; and then determine an initial bandwidth of the target subordinate device based on the estimated quantity of services of the target subordinate device, and send initial bandwidth information to the target subordinate device, where the initial bandwidth information is used to indicate a size of an initial bandwidth of the target subordinate device. For example, the data center may use a product of an overall bandwidth shared by a plurality of subordinate devices and a proportion of the estimated quantity of services of the target subordinate device as the initial bandwidth allocated to the target subordinate device. The proportion of the estimated quantity of services of the target subordinate device is equal to a ratio of the estimated quantity of services of the target subordinate device to an estimated total quantity of services of the plurality of subordinate devices. Alternatively, the data center may use a policy of equal allocation to allocate initial bandwidths to the plurality of subordinate devices.

Optionally, the data center may perform bandwidth allocation and adjustment with two stages. In the first stage, an overall bandwidth is allocated to each logical link, and in the second stage, a bandwidth on a logical link is allocated to each subordinate node on the logical link. For example, in the content transmission system shown in FIG. 1, the data center first determines bandwidths on a first link and a second link, and then determines bandwidths of the subordinate device 102A and the subordinate device 102B on the first link.

Step 203: The data center sends target bandwidth information to the target subordinate device.

The target bandwidth information is used to indicate a size of an adjusted bandwidth of the target subordinate device. Optionally, after receiving the target bandwidth information sent by the data center, the target subordinate device adjusts a content sending rate based on the size of the adjusted bandwidth, and continues to send to-be-transmitted content to the data center at an adjusted content sending rate.

In this embodiment of this application, the data center dynamically adjusts, based on service information of the subordinate device, a bandwidth of the subordinate device. The subordinate device may use a last allocated bandwidth to actively transmit various types of content to the data center, thereby improving content transmission flexibility. In addition, because the subordinate device can sense a size of the bandwidth of the subordinate device, the subordinate device may use a limited bandwidth for content transmission as much as possible, thereby improving bandwidth utilization.

Optionally, there may be a plurality of content types of to-be-transmitted content of a subordinate device. There are different priorities of the different content types. In this embodiment of this application, the data center may further manage the priorities of the plurality of content types corresponding to the subordinate device. For the implementation process of managing the priorities, refer to the following step 204 to step 206.

Step 204: The data center obtains a plurality of content types corresponding to the target subordinate device.

Optionally, after networking between the data center and the target subordinate device is completed, the data center determines the plurality of content types corresponding to the target subordinate device based on an application environment of the target subordinate device. Alternatively, the target subordinate device sends the plurality of content types corresponding to the target subordinate device to the data center. Each time a content type corresponding to the target subordinate device is updated, the target subordinate device sends an updated content type corresponding to the target subordinate device to the data center.

Step 205: The data center determines the priorities of the plurality of content types corresponding to the target subordinate device.

Optionally, the data center determines the priorities of the plurality of content types corresponding to the target subordinate device based on a to-be-run service scenario of the target subordinate device.

Because the target subordinate device runs different service scenarios, the priorities of the plurality of content types corresponding to the target subordinate device are usually different. To be specific, a priority of a content type is associated with a service scenario. Therefore, the data center determines the priorities of the plurality of content types corresponding to the target subordinate device based on the to-be-run service scenario of the target subordinate device. In this way, a priority of the content type corresponding to the target subordinate device can match the service scenario run by the target subordinate device.

Optionally, the data center stores a mapping relationship between a scenario and a priority, and the mapping relationship between a scenario and a priority includes a plurality of groups of priorities corresponding to a plurality of service scenarios, each of the groups of priorities includes the priorities of the plurality of content types corresponding to the target subordinate device. For example, the mapping relationship between a scenario and a priority stored in the data center is shown in Table 1.

**Table 1**

| Scenario | Priority | |
|---|---|---|
| Service scenario 1 | Content type 1 | A |
| | Content type 2 | B |
| | Content type 3 | C |
| Service scenario 2 | Content type 1 | B |
| | Content type 2 | A |
| | Content type 3 | C |

Refer to Table 1. In the service scenario 1, a priority of the content type 1 is higher than a priority of the content type 2, and the priority of the content type 2 is higher than a priority of the content type 3. In the service scenario 2, the priority of the content type 2 is higher than the priority of the content type 1, and the priority of the content type 1 is higher than the priority of the content type 3. For example, in the high people flow service scenario, a bandwidth occupation priority of video surveillance alarm data is higher than a bandwidth occupation priority of a short alarm video, and the bandwidth occupation priority of the short alarm video is higher than a bandwidth occupation priority of video analysis result data. In the emergency service scenario, a bandwidth occupation priority of video surveillance alarm data is higher than a bandwidth occupation priority of a real-time video, the bandwidth occupation priority of the real-time video is higher than a bandwidth occupation priority of a short alarm video, and the bandwidth occupation priority of the short alarm video is higher than a bandwidth occupation priority of video analysis result data. In the video analysis result data, a bandwidth occupation priority of a metadata-associated small image is higher than a bandwidth occupation priority of a metadata-associated large image.

Optionally, whenever the target subordinate device satisfies a service scenario switching rule, the data center determines the priorities of the plurality of content types corresponding to the target subordinate device in the to-be-run service scenario.

For example, the service scenario run by the target subordinate device includes a low people flow service scenario and a high people flow service scenario. It is assumed that the high people flow service scenario is a service scenario within morning and evening peak hours, that is, the high people flow service scenario and the low people flow service scenario are associated only with time. The data center determines that the target subordinate device satisfies the service scenario switching rule at a start of morning peak hours, an end of the morning peak hours, a start of evening peak hours, and an end of the evening peak hours. At the start of the morning peak hours and the start of the evening peak hours, the data center determines that the service scenario run by the target subordinate device is switched from the low people flow service scenario to the high people flow service scenario. In this case, the data center obtains priorities of a plurality of content types corresponding to the target subordinate device in the high people flow service scenario. At the end of the morning peak hours and the end of the evening peak hours, the data center determines that the service scenario run by the target subordinate device is switched from the high people flow service scenario to the low people flow service scenario. In this case, the data center obtains priorities of a plurality of content types corresponding to the target subordinate device in the low people flow service scenario.

For another example, the service scenario run by the target subordinate device includes a non-emergency service scenario and an emergency service scenario. When the data center determines, based on content transmitted by the target subordinate device, that the service scenario run by the target subordinate device is switched from the non-emergency service scenario to the emergency service scenario, or when the data center receives a switching instruction for instructing to switch to the emergency service scenario, the data center determines that the target subordinate device satisfies the service scenario switching rule. In this case, the data center obtains priorities of a plurality of content types corresponding to the target subordinate device in the emergency service scenario.

Step 206: The data center sends content priority information to the target subordinate device.

The content priority information is used to indicate bandwidth occupation priorities of the plurality of content types corresponding to the target subordinate device.

Optionally, in step 205, the data center determines the priorities of the plurality of content types corresponding to the target subordinate device based on the to-be-run service scenario of the target subordinate device. In this case, in step 206, the data center sends content priority information corresponding to the to-be-run service scenario to the target subordinate device, where the content priority information is used to indicate bandwidth occupation priorities of the plurality of content types of the target subordinate device in the to-be-run service scenario.

In a possible implementation, when the service scenario run by the target subordinate device is switched from the low people flow service scenario to the high people flow service scenario, the data center sends content priority information corresponding to the high people flow service scenario to the target subordinate device. The content priority information is used to indicate that a bandwidth occupation priority of video surveillance alarm data is higher than a bandwidth occupation priority of a short alarm video, and the bandwidth occupation priority of the short alarm video is higher than a bandwidth occupation priority of video analysis result data.

In another possible implementation, when the service scenario run by the target subordinate device is switched from the non-emergency service scenario to the emergency service scenario, the data center sends content priority information corresponding to the emergency service scenario to the target subordinate device. The content priority information is used to indicate that a bandwidth occupation priority of video surveillance alarm data is higher than a bandwidth occupation priority of a real-time video, the bandwidth occupation priority of the real-time video is higher than a bandwidth occupation priority of a short alarm video, and the bandwidth occupation priority of the short alarm video is higher than a bandwidth occupation priority of video analysis result data.

Optionally, when both the data center and the target subordinate device store a mapping relationship between a scenario and a priority, and the mapping relationship between a scenario and a priority includes a plurality of groups of priorities corresponding to a plurality of service scenarios, each of the groups of priorities includes the priorities of the plurality of content types corresponding to the target subordinate device. In this case, an implementation process of step 206 includes: The data center sends an identifier of the to-be-run service scenario of the target subordinate device to the target subordinate device.

Optionally, during initialization of the content transmission system, the data center sends the mapping relationship between a scenario and a priority to various subordinate devices, and the subordinate devices receive and store the mapping relationship between a scenario and a priority. In a running process of the content transmission system, when the mapping relationship between a scenario and a priority in the data center is updated (for example, added, deleted, or changed), the data center sends an updated mapping relationship between a scenario and a priority to the various subordinate devices. Alternatively, during initialization of the content transmission system, an administrator manually enters the mapping relationship between a scenario and a priority into the data center and the various subordinate devices. When the mapping relationship between a scenario and a priority is updated, the administrator manually updates the mapping relationship between a scenario and a priority stored in the data center and the various subordinate devices.

In this embodiment of this application, the data center needs to send only an identifier of a service scenario to a subordinate device, but does not need to send, to the subordinate device, priorities of various content types corresponding to the subordinate device, so that an amount of transmitted data of content priority information sent by the data center to the subordinate device can be reduced, thereby reducing network overheads. In addition, because a mapping relationship between a scenario and a priority is stored in the subordinate device, the subordinate device may obtain a group of corresponding priorities after receiving an identifier of a to-be-run service scenario, and then adjust priorities of a plurality of content types corresponding to the subordinate device in batches, thereby improving priority adjustment efficiency.

Alternatively, in step 206, the data center may send, to the subordinate device, priorities of various content types corresponding to the subordinate device. Specific content of the content priority information sent by the data center is not limited in this embodiment of this application.

Optionally, after receiving the content priority information sent by the data center, the target subordinate device sequentially transmits content of different content types to the data center based on the bandwidth occupation priorities that are of the plurality of content types and that are indicated by the content priority information. For example, to-be-transmitted content of the target subordinate device includes first content and second content, and a bandwidth occupation priority of a content type corresponding to the first content is higher than a bandwidth occupation priority of a content type corresponding to the second content. In this case, the target subordinate device first transmits the first content to the data center, and continues to transmit the second content to the data center after transmission of the first content is completed.

In a process of sending content with a relatively low bandwidth occupation priority by a subordinate device to the data center, if there is to-be-transmitted content with a relatively high bandwidth occupation priority, the subordinate device suspends sending the content with a relatively low bandwidth occupation priority, and preferentially sends the content with a relatively high bandwidth occupation priority.

In this embodiment of this application, the subordinate device actively transmits content of various types to the data center based on a bandwidth occupation priority of a content type, thereby improving content transmission flexibility. In addition, when a link bandwidth is limited, effectiveness and real-time performance of transmitting high-priority content can be ensured, thereby improving content transmission reliability.

Optionally, when a service scenario run by the subordinate device is associated only with time, the subordinate device may autonomously adjust, based on a mapping relationship between a scenario and a priority, bandwidth occupation priorities of a plurality of content types corresponding to the subordinate device as time changes.

For example, the subordinate device switches a running service scenario from the low people flow service scenario to the high people flow service scenario at the start of the morning peak hours and the start of the evening peak hours, and starts to transmit content to the data center based on a group of priorities corresponding to the high people flow service scenario. At the end of the morning peak hours and the end of the evening peak hours, the subordinate device switches the running service scenario from the high people flow service scenario to the low people flow service scenario, and starts to transmit content to the data center based on a group of priorities corresponding to the low people flow service scenario.

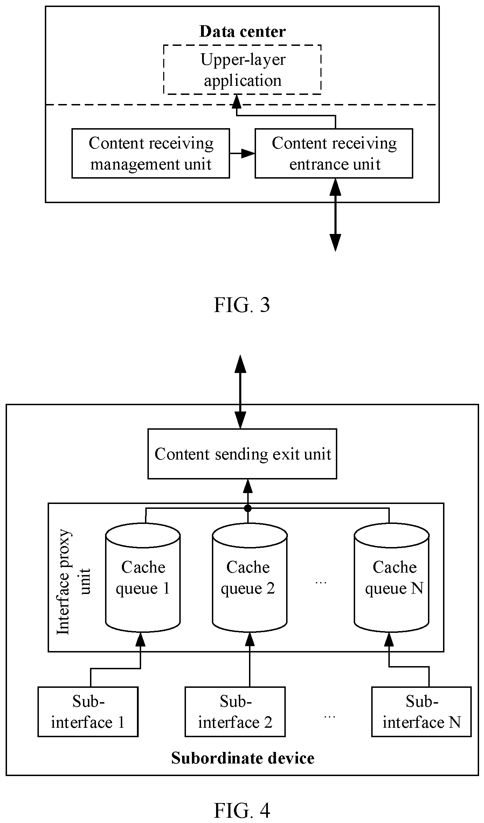

Optionally, FIG. 3 is a schematic diagram of a structure of a data center according to an embodiment of this application. As shown in FIG. 3, the data center includes a content receiving entrance unit and a content receiving management unit. The content receiving entrance unit is configured to: receive content sent by a subordinate device, and distribute the received content to an upper-layer application for storage. The content receiving entrance unit corresponds to a port of the data center. The content receiving management unit is configured to perform congestion sensing, network topology and bandwidth control, service volume statistics, content priority defining, service scenario defining, switching rule configuration, dynamic bandwidth allocation, and the like. To be specific, the content receiving management unit is configured to perform the foregoing step 201, step 202, step 204, and step 205.

Optionally, FIG. 4 is a schematic diagram of a structure of a subordinate device according to an embodiment of this application. As shown in FIG. 4, the subordinate device includes a content sending exit unit, an interface proxy unit, and a plurality of sub-interfaces, where the plurality of sub-interfaces are respectively denoted as sub-interfaces 1-N, and N is an integer greater than 1. Each of the plurality of sub-interfaces may send data independently, and under unified management of the interface proxy unit, the plurality of sub-interfaces share one content sending exit unit to transmit content to a data center. The content sending exit unit corresponds to a port of the subordinate device. The interface proxy unit is configured to dynamically control, based on bandwidth information sent by the data center, an overall bandwidth quota for content sending; the interface proxy unit is further configured to dynamically configure bandwidth occupation priorities of different content types based on content priority information sent by the data center. The sub-interface in this embodiment of this application is a logic sub-interface, and implementation of the sub-interface may be in a passive request-response mode, or may be in a publish-subscribe mode, provided that the sub-interface can be controlled by the interface proxy unit for sending or stopping sending. Optionally, the interface proxy unit is a hypertext transfer protocol (hipper text transfer protocol, HTTP) proxy unit. In this case, the sub-interface may be a private interface defined based on HTTP, for example, may be an HTTP REST interface. Each sub-interface is configured to obtain content of a content type corresponding to a subordinate device. There are different bandwidth occupation priorities of different content types, that is, priorities of different sub-interfaces are different.

For example, a prioritizing mechanism for bandwidth occupation priorities of different content types in the subordinate device may be shown in Table 2.

**Table 2**

| Interface | Sub-interface | Content type | Priority | Sub-interface definition |
|---|---|---|---|---|
| | Sub-interface 1 | Content type 1 | C | Usual small image GET https://[ip]: [port]/small_pict/[id] |
| Port corresponding to a content sending exit unit | Sub-interface 2 | Content type 2 | A | Alarm metadata GET https://[ip]:[port]/warning_meta/[id] |
| | Sub-interface 3 | Content type 3 | B | Usual analysis metadata GET https://[ip]:[port]/general_meta/[id] |
| | ... | ... | ... | ... |

The priorities of the sub-interfaces in Table 2 may be adjusted dynamically. For example, a subordinate device may dynamically adjust a priority of a sub-interface based on the content priority information sent by the data center. Priorities of all sub-interfaces correspond to one service scenario.

Optionally, a plurality of cache queues are included in the subordinate device, and each cache queue is used to store content obtained at a sub-interface. For example, further referring to FIG. 4, cache queues 1-N are configured in the interface proxy unit, where N cache queues are in a one-to-one correspondence with N sub-interfaces. Alternatively, the cache queue may be configured in a storage unit independent of the interface proxy unit, and the interface proxy unit is connected to the storage unit. Content sent by all the sub-interfaces is first cached in corresponding cache queues. The content sending exit unit sequentially transmits, under restriction of an allocated bandwidth, the content in the plurality of cache queues to the data center in descending order of priorities, that is, the content sending exit unit first transmits content in a high-priority cache queue, and then transmits content in a low-priority cache queue after the high-priority cache queue is empty.

In this embodiment of this application, when a cache queue of the subordinate device is full, the interface proxy unit notifies a corresponding sub-interface to stop sending data, so that sending speeds of content of different priorities are flexibly controlled through back pressure, thereby implementing orderly occupation of a limited bandwidth and automatic control of a plurality of sub-interfaces.

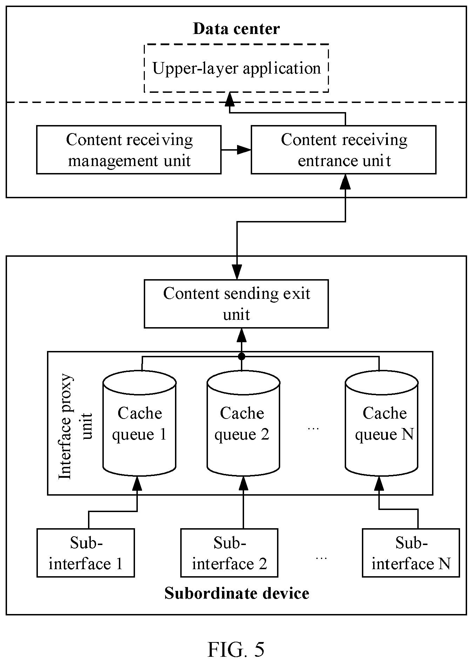

Optionally, FIG. 5 is a schematic diagram of a connection between a data center and a subordinate device according to an embodiment of this application. The data center is the data center shown in FIG. 3, and the subordinate device is the subordinate device shown in FIG. 4. WebSocket connections, long-lived transmission control protocol (transmission control protocol, TCP) connections, or the like may be established between a port of the data center and a port of the subordinate device. This is not limited in this embodiment of this application.

A sequence of steps in the bandwidth management method provided in this embodiment of this application may be appropriately adjusted, or the steps may be correspondingly increased or decreased based on a condition. Any method readily figured out by a person skilled in the art within the technical scope disclosed in this application shall fall within the protection scope of this application.

In conclusion, according to the bandwidth management method provided in this embodiment of this application, the data center dynamically adjusts, based on service information of the subordinate device, a bandwidth of the subordinate device. The subordinate device may use a last allocated bandwidth to transmit various types of content to the data center in a timely manner, thereby improving content transmission flexibility. Because the subordinate device can sense a size of the bandwidth of the subordinate device, the subordinate device may use a limited bandwidth allocated to the subordinate device to a greatest extent for content transmission, thereby improving bandwidth utilization. In addition, the data center sends the content priority information to the target subordinate device, so that the target subordinate device actively transmits various types of content to the data center based on a bandwidth occupation priority of each content type, and content transmission flexibility is improved. In addition, when a link bandwidth is limited, effectiveness and real-time performance of transmitting high-priority content can be ensured, thereby improving content transmission reliability. Considering a varying amount of data in different time periods, a content transmission system may rent a smaller bandwidth. When a quantity of services is relatively large, content of a higher priority is transmitted, and when a quantity of services is relatively small, content of a lower priority is transmitted, so that there is no need to rent a peak bandwidth, thereby reducing network costs.

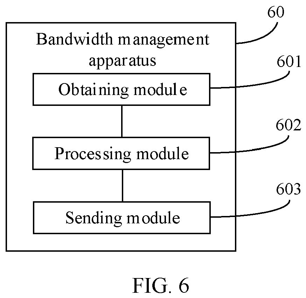

FIG. 6 is a schematic diagram of a structure of a bandwidth management apparatus according to an embodiment of this application. The apparatus may be used in the data center 101 in the content transmission system shown in FIG. 1. The data center is separately connected to the plurality of subordinate devices, and the plurality of subordinate devices share an overall bandwidth for transmission with the data center. As shown in FIG. 6, the apparatus 60 includes:
an obtaining module 601, configured to obtain service information of a target subordinate device;
a processing module 602, configured to adjust a bandwidth of the target subordinate device based on the service information of the target subordinate device; and
a sending module 603, configured to send target bandwidth information to the target subordinate device, where the target bandwidth information is used to indicate a size of an adjusted bandwidth of the target subordinate device.

Optionally, the service information describes actual bandwidth occupation of the target subordinate device, and the processing module 602 is configured to adjust the bandwidth of the target subordinate device based on actual bandwidth occupation of the target subordinate device within a historical time period.

Optionally, the processing module 602 is configured to adjust the bandwidth of the target subordinate device based on a proportion of an actually occupied bandwidth of the target subordinate device in an allocated bandwidth within the historical time period; and/or the processing module 602 is configured to adjust the bandwidth of the target subordinate device based on a proportion of the actually occupied bandwidth of the target subordinate device in an overall actually occupied bandwidth of the plurality of subordinate devices within the historical time period.

Optionally, the service information describes a service scenario run by the target subordinate device, and the processing module 602 is configured to adjust a bandwidth of the target subordinate device based on the service scenario run by the target subordinate device.

Optionally, the processing module 602 is configured to: increase the bandwidth of the target subordinate device when it is determined based on the service information that the service scenario run by the target subordinate device is switched from a low people flow service scenario to a high people flow service scenario; and increase the bandwidth of the target subordinate device when it is determined based on the service information that the service scenario run by the target subordinate device is switched from a non-emergency service scenario to an emergency service scenario. Optionally, the processing module 602 is further configured to: determine, after networking between the data center and the target subordinate device is completed, an estimated quantity of services of the target subordinate device based on a type of a service carried on the target subordinate device; and determine an initial bandwidth of the target subordinate device based on the estimated quantity of services of the target subordinate device. The sending module 603 is further configured to send initial bandwidth information to the target subordinate device, where the initial bandwidth information is used to indicate a size of the initial bandwidth of the target subordinate device.

Optionally, the obtaining module 601 is further configured to obtain a plurality of content types corresponding to the target subordinate device. The processing module 602 is further configured to determine priorities of the plurality of content types corresponding to the target subordinate device. The sending module 603 is further configured to send content priority information to the target subordinate device, where the content priority information is used to indicate bandwidth occupation priorities of the plurality of content types corresponding to the target subordinate device. Optionally, the processing module 602 is configured to determine the bandwidth occupation priority of each content type corresponding to the target subordinate device based on a to-be-run service scenario of the target subordinate device. The sending module 603 is configured to send content priority information corresponding to the to-be-run service scenario to the target subordinate device, where the content priority information is used to indicate bandwidth occupation priorities of the plurality of content types of the target subordinate device in the to-be-run service scenario. Optionally, the sending module 603 is configured to: when the service scenario run by the target subordinate device is switched from the low people flow service scenario to the high people flow service scenario, send content priority information corresponding to the high people flow service scenario to the target subordinate device. The content priority information is used to indicate that a bandwidth occupation priority of video surveillance alarm data is higher than a bandwidth occupation priority of a short alarm video, and the bandwidth occupation priority of the short alarm video is higher than a bandwidth occupation priority of video analysis result data.

Optionally, the sending module 603 is configured to: when the service scenario run by the target subordinate device is switched from the non-emergency service scenario to the emergency service scenario, send content priority information corresponding to the emergency service scenario to the target subordinate device. The content priority information is used to indicate that a bandwidth occupation priority of video surveillance alarm data is higher than a bandwidth occupation priority of a real-time video, the bandwidth occupation priority of the real-time video is higher than a bandwidth occupation priority of a short alarm video, and the bandwidth occupation priority of the short alarm video is higher than a bandwidth occupation priority of video analysis result data.

Optionally, both the data center and the target subordinate device store a mapping relationship between a scenario and a priority, and the mapping relationship between a scenario and a priority includes a plurality of groups of priorities corresponding to a plurality of service scenarios, each of the groups of priorities includes the bandwidth occupation priorities of the plurality of content types. The sending module 603 is configured to send an identifier of the to-be-run service scenario of the target subordinate device to the target subordinate device.

In conclusion, according to the bandwidth management apparatus provided in this embodiment of this application, the data center uses the processing module to dynamically adjust, based on service information of the subordinate device, a bandwidth of the subordinate device. The subordinate device may use a last allocated bandwidth to transmit various types of content to the data center in a timely manner, thereby improving content transmission flexibility. Because the subordinate device can sense a size of the bandwidth of the subordinate device, the subordinate device may use a limited bandwidth allocated to the subordinate device to a greatest extent for content transmission, thereby improving bandwidth utilization. In addition, the data center uses the sending module to send the content priority information to the target subordinate device, so that the target subordinate device actively transmits various types of content to the data center based on a bandwidth occupation priority of each content type, and content transmission flexibility is improved. In addition, when a link bandwidth is limited, effectiveness and real-time performance of transmitting high-priority content can be ensured, thereby improving content transmission reliability. Considering a varying amount of data in different time periods, a content transmission system may rent a smaller bandwidth. When a quantity of services is relatively large, content of a higher priority is transmitted, and when a quantity of services is relatively small, content of a lower priority is transmitted, so that there is no need to use a peak bandwidth, thereby reducing network costs. For the apparatus in the foregoing embodiment, specific manners of executing operations by each module are described in detail in the embodiments related to the method, and details are not described herein.

An embodiment of this application provides a bandwidth management device, where the device includes a processor, a memory, and a transceiver.

The transceiver is configured to receive and/or send data.

The memory (such as an internal storage or hard disk) is configured to store a computer program, and the computer program includes program instructions.

The processor is configured to: invoke the computer program, and cooperate with the transceiver to implement actions performed by the data center in the foregoing method embodiment. In some cases, the memory may be integrated in the processor.

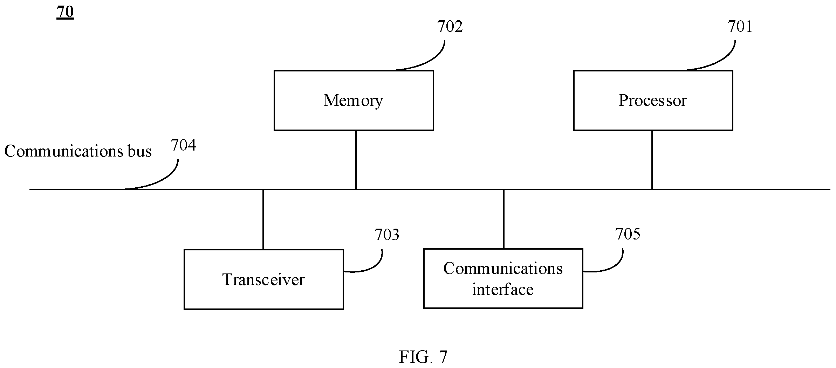

For example, FIG. 7 is a block diagram of a bandwidth management device according to an embodiment of this application. The bandwidth management device may be the data center 101 in the content transmission system shown in FIG. 1. As shown in FIG. 7, a bandwidth management device 70 includes a processor 701, a memory 702, and a transceiver 703.

Optionally, the bandwidth management device 70 further includes a communications bus 704 and a communications interface 705.

The processor 701 may be a general-purpose central processing unit (central processing unit, CPU), an application-specific integrated circuit (application-specific integrated circuit, ASIC), or one or more integrated circuits configured to control execution of programs in the solutions of this application.

The communications bus 704 may include a channel used to transmit information between the foregoing components. The memory 702 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM), another optical disc storage, an optical disc storage (including a compact disc, a laser disc, an optical disc, a digital versatile disc, a Blu-ray disc, and the like), a magnetic disk, another magnetic storage device, or any other medium capable of carrying or storing desired program code in the form of instructions or data structures and capable of being accessed by a computer, but not limited thereto. The memory 702 may exist independently, and is connected to the processor 701 through the communications bus 704. Alternatively, the memory 702 may be integrated with the processor 701.

The memory 702 is configured to store program code for executing the solutions of this application, and the processor 701 controls the execution. The processor 701 is configured to execute the program code stored in the memory 702. The program code may include one or more software modules. The one or more software modules may be the software modules provided in the embodiment corresponding to FIG. 6.

The communications interface 705 uses the transceiver 703 and is configured to communicate with another device or a communications network such as an Ethernet, a radio access network, or a wireless local area network.

In specific implementation, in an embodiment, the bandwidth management device may include a plurality of processors. Each of the processors may be a single-core (single-core) processor, or may be a multi-core (multi-core) processor. The processor herein may refer to one or more devices, circuits, and/or processing cores used to process data (for example, computer program instructions).

An embodiment of this application further provides a computer storage medium, where the computer storage medium stores instructions, and when the instructions are executed by a processor of a computer device, actions performed by the data center in the foregoing method embodiment are implemented.

An embodiment of this application further provides a chip, where the chip includes a programmable logic circuit and/or program instructions, and when the chip is run, actions performed by the data center in the foregoing method embodiment are implemented.

All or some of the steps of the embodiments may be implemented by hardware or a program instructing related hardware. The program may be stored in a computer-readable storage medium. The storage medium mentioned above may be a read-only memory, a magnetic disk, an optical disc, or the like.

In the embodiments of this application, terms "first", "second", and "third" are merely used for description, but cannot be understood as indicating or implying relative importance.

The term "and/or" in this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely example embodiments of this application, and are not intended to limit this application. Any modification, equivalent replacement, or improvement made based on this application shall fall within the protection scope of this application.

## Claims

1. A bandwidth management method, applied to a data center, wherein the data center is separately connected to a plurality of subordinate devices, the plurality of subordinate devices share an overall bandwidth for transmission with the data center, and the method comprises:
obtaining service information of a target subordinate device;
adjusting a bandwidth of the target subordinate device based on the service information of the target subordinate device; and
sending target bandwidth information to the target subordinate device, wherein the target bandwidth information is used to indicate a size of an adjusted bandwidth of the target subordinate device.

2. The method according to claim 1, wherein the service information describes actual bandwidth occupation of the target subordinate device; and the adjusting a bandwidth of the target subordinate device based on the service information of the target subordinate device comprises:
adjusting the bandwidth of the target subordinate device based on actual bandwidth occupation of the target subordinate device within a historical time period.

3. The method according to claim 2, wherein the adjusting the bandwidth of the target subordinate device based on actual bandwidth occupation of the target subordinate device within a historical time period comprises:
adjusting the bandwidth of the target subordinate device based on a proportion of an actually occupied bandwidth of the target subordinate device in an allocated bandwidth within the historical time period.

4. The method according to claim 2, wherein the adjusting the bandwidth of the target subordinate device based on actual bandwidth occupation of the target subordinate device within a historical time period comprises:
adjusting the bandwidth of the target subordinate device based on a proportion of the actually occupied bandwidth of the target subordinate device in an overall actually occupied bandwidth of the plurality of subordinate devices within the historical time period.

5. The method according to claim 1, wherein the service information describes a service scenario run by the target subordinate device; and the adjusting an allocated bandwidth of the target subordinate device based on the service information of the target subordinate device comprises:
adjusting the bandwidth of the target subordinate device based on the service scenario run by the target subordinate device.

6. The method according to claim 5, wherein the adjusting a bandwidth of the target subordinate device based on the service information of the target subordinate device comprises:
increasing the bandwidth of the target subordinate device when it is determined based on the service information that the service scenario run by the target subordinate device is switched from a low people flow service scenario to a high people flow service scenario; and
increasing the bandwidth of the target subordinate device when it is determined based on the service information that the service scenario run by the target subordinate device is switched from a non-emergency service scenario to an emergency service scenario.

7. The method according to any one of claims 1 to 6, wherein the method further comprises:
determining, after networking between the data center and the target subordinate device is completed, an estimated quantity of services of the target subordinate device based on a type of a service carried on the target subordinate device;
determining an initial bandwidth of the target subordinate device based on the estimated quantity of services of the target subordinate device; and
sending initial bandwidth information to the target subordinate device, wherein the initial bandwidth information is used to indicate a size of an initial bandwidth of the target subordinate device.

8. The method according to any one of claims 1 to 7, wherein the method further comprises:
obtaining a plurality of content types corresponding to the target subordinate device;
determining priorities of the plurality of content types corresponding to the target subordinate device; and
sending content priority information to the target subordinate device, wherein the content priority information is used to indicate bandwidth occupation priorities of the plurality of content types corresponding to the target subordinate device.

9. The method according to claim 8, wherein the determining a priority of each content type corresponding to the target subordinate device comprises:
determining the bandwidth occupation priority of each content type corresponding to the target subordinate device based on a to-be-run service scenario of the target subordinate device; and
the sending content priority information to the target subordinate device comprises:
sending content priority information corresponding to the to-be-run service scenario to the target subordinate device, wherein the content priority information is used to indicate bandwidth occupation priorities of the plurality of content types of the target subordinate device in the to-be-run service scenario.

10. The method according to claim 9, wherein the sending content priority information corresponding to the to-be-run service scenario to the target subordinate device comprises:
when the service scenario run by the target subordinate device is switched from the low people flow service scenario to the high people flow service scenario, sending content priority information corresponding to the high people flow service scenario to the target subordinate device, wherein
the content priority information is used to indicate that a bandwidth occupation priority of video surveillance alarm data is higher than a bandwidth occupation priority of a short alarm video, and the bandwidth occupation priority of the short alarm video is higher than a bandwidth occupation priority of video analysis result data.

11. The method according to claim 9, wherein the sending content priority information corresponding to the to-be-run service scenario to the target subordinate device comprises:
when the service scenario run by the target subordinate device is switched from the non-emergency service scenario to the emergency service scenario, sending content priority information corresponding to the emergency service scenario to the target subordinate device, wherein
the content priority information is used to indicate that a bandwidth occupation priority of video surveillance alarm data is higher than a bandwidth occupation priority of a real-time video, the bandwidth occupation priority of the real-time video is higher than a bandwidth occupation priority of a short alarm video, and the bandwidth occupation priority of the short alarm video is higher than a bandwidth occupation priority of video analysis result data.

12. The method according to any one of claims 9 to 11, wherein both the data center and the target subordinate device store a mapping relationship between a scenario and a priority, and the mapping relationship between a scenario and a priority comprises a plurality of groups of priorities corresponding to a plurality of service scenarios, each of the groups of priorities comprises the bandwidth occupation priorities of the plurality of content types; and
the sending content priority information corresponding to the to-be-run service scenario to the target subordinate device comprises:
sending an identifier of the to-be-run service scenario of the target subordinate device to the target subordinate device.

13. A bandwidth management apparatus, applied to a data center, wherein the data center is separately connected to a plurality of subordinate devices, the plurality of subordinate devices share an overall bandwidth for transmission with the data center, and the apparatus comprises:
an obtaining module, configured to obtain service information of a target subordinate device;
a processing module, configured to adjust a bandwidth of the target subordinate device based on the service information of the target subordinate device; and
a sending module, configured to send target bandwidth information to the target subordinate device, wherein the target bandwidth information is used to indicate a size of an adjusted bandwidth of the target subordinate device.

14. The apparatus according to claim 13, wherein the service information describes actual bandwidth occupation of the target subordinate device; and the processing module is configured to:
adjust the bandwidth of the target subordinate device based on actual bandwidth occupation of the target subordinate device within a historical time period.

15. The apparatus according to claim 14, wherein the processing module is configured to:
adjust the bandwidth of the target subordinate device based on a proportion of an actually occupied bandwidth of the target subordinate device in an allocated bandwidth within the historical time period.

16. The apparatus according to claim 14, wherein the processing module is configured to:
adjust the bandwidth of the target subordinate device based on a proportion of the actually occupied bandwidth of the target subordinate device in an overall actually occupied bandwidth of the plurality of subordinate devices within the historical time period.

17. The apparatus according to claim 13, wherein the service information describes a service scenario run by the target subordinate device; and the processing module is configured to:
adjust the bandwidth of the target subordinate device based on the service scenario run by the target subordinate device.

18. The apparatus according to claim 17, wherein the processing module is configured to:
increase the bandwidth of the target subordinate device when it is determined based on the service information that the service scenario run by the target subordinate device is switched from a low people flow service scenario to a high people flow service scenario; and
increase the bandwidth of the target subordinate device when it is determined based on the service information that the service scenario run by the target subordinate device is switched from a non-emergency service scenario to an emergency service scenario.

19. The apparatus according to any one of claims 13 to 18, wherein
the processing module is further configured to: determine, after networking between the data center and the target subordinate device is completed, an estimated quantity of services of the target subordinate device based on a type of a service carried on the target subordinate device, and determine an initial bandwidth of the target subordinate device based on the estimated quantity of services of the target subordinate device; and
the sending module is further configured to send initial bandwidth information to the target subordinate device, wherein the initial bandwidth information is used to indicate a size of an initial bandwidth of the target subordinate device.

20. The apparatus according to any one of claims 13 to 19, wherein
the obtaining module is further configured to obtain a plurality of content types corresponding to the target subordinate device;
the processing module is further configured to determine priorities of the plurality of content types corresponding to the target subordinate device; and
the sending module is further configured to send content priority information to the target subordinate device, wherein the content priority information is used to indicate bandwidth occupation priorities of the plurality of content types corresponding to the target subordinate device.

21. The apparatus according to claim 20, wherein
the processing module is configured to determine the bandwidth occupation priority of each content type corresponding to the target subordinate device based on a to-be-run service scenario of the target subordinate device; and
the sending module is configured to send content priority information corresponding to the to-be-run service scenario to the target subordinate device, wherein the content priority information is used to indicate bandwidth occupation priorities of the plurality of content types of the target subordinate device in the to-be-run service scenario.

22. The apparatus according to claim 21, wherein the sending module is configured to:
when the service scenario run by the target subordinate device is switched from the low people flow service scenario to the high people flow service scenario, send content priority information corresponding to the high people flow service scenario to the target subordinate device, wherein
the content priority information is used to indicate that a bandwidth occupation priority of video surveillance alarm data is higher than a bandwidth occupation priority of a short alarm video, and the bandwidth occupation priority of the short alarm video is higher than a bandwidth occupation priority of video analysis result data.

23. The apparatus according to claim 21, wherein the sending module is configured to:
when the service scenario run by the target subordinate device is switched from the non-emergency service scenario to the emergency service scenario, send content priority information corresponding to the emergency service scenario to the target subordinate device, wherein
the content priority information is used to indicate that a bandwidth occupation priority of video surveillance alarm data is higher than a bandwidth occupation priority of a real-time video, the bandwidth occupation priority of the real-time video is higher than a bandwidth occupation priority of a short alarm video, and the bandwidth occupation priority of the short alarm video is higher than a bandwidth occupation priority of video analysis result data.

24. The apparatus according to any one of claims 21 to 23, wherein both the data center and the target subordinate device store a mapping relationship between a scenario and a priority, and the mapping relationship between a scenario and a priority comprises a plurality of groups of priorities corresponding to a plurality of service scenarios, each of the groups of priorities comprises the bandwidth occupation priorities of the plurality of content types; and
the sending module is configured to send an identifier of the to-be-run service scenario of the target subordinate device to the target subordinate device.

25. A bandwidth management device, comprising a processor, a memory, and a transceiver, wherein
the transceiver is configured to receive and/or send data;
the memory is configured to store a computer program, and the computer program comprises program instructions; and
the processor is configured to: invoke the computer program, and cooperate with the transceiver to implement the bandwidth management method according to any one of claims 1 to 12.

26. A computer storage medium, wherein the computer storage medium stores instructions, and when the instructions are executed by a processor of a computer device, the bandwidth management method according to any one of claims 1 to 12 is implemented.

27. A chip, wherein the chip comprises a programmable logic circuit and/or program instructions, and when the chip is run, the bandwidth management method according to any one of claims 1 to 12 is implemented.
